# FASCICULE DE BREVET EUROPEEN

(11) **EP 1 971 201 B1**
(45) Date de publication et mention de la délivrance du brevet: **16.12.2009**
(21) Numéro de dépôt: 06709071.2
(22) Date de dépôt: 11.01.2006
(51) Int. Cl.: A01M 23/18

(54) **PIEGE A CAGE PLIANTE POUR LA CAPTURE D'UN ANIMAL**
FALTKÄFIGFALLE ZUM FANGEN EINES TIERES
FOLDING-CAGE TRAP FOR CAPTURING AN ANIMAL

(43) Date de publication de la demande: 24.09.2008
(73) Titulaire: Ukal Elevage (Société à Responsabilité Limitée), 67360 Eschbach (FR)
(72) Inventeur: GUILLIOUD, Jean Marc, F-38160 Chatte (FR)
(74) Mandataire: Nuss, Pierre
(86) Numéro de dépôt international: PCT/FR2006/000063
(87) Numéro de publication internationale: WO 2007/080233

(56) Documents cités:
- FR-A- 2 872 681
- US-A- 3 913 258
- US-A- 5 862 624
- US-A- 5 950 568
- US-A1- 2005 132 973

## Description

### Domaine technique de l'invention

L'invention est relative à un piège pour la capture d'un animal, comprenant une cage métallique à l'intérieur de laquelle se trouve un mécanisme de déclenchement d'au moins une porte d'accès.

### Etat de la technique

Le document FR-A-2783399 décrit un piège à cage du genre mentionné, dans lequel la cage est formée par une ossature rigide en forme de parallélépipède rectangle, et comprenant deux cadres d'extrémités constituant les entrées bilatérales pour l'accès à l'intérieur de la cage. Une telle ossature n'est pas transformable, et présente un encombrement important lors du transport pour l'installation sur le site, ou lors du rangement en cas de non usage. Un piège conforme au préambule de la revendication 1 est décrit dans US-A-3 913 258.

### Objet de l'invention

L'objet de l'invention consiste à réaliser un piège à cage métallique facilement transformable pour réduire l'encombrement lors du transport ou du rangement.

Le dispositif selon l'invention telle qu'elle est caractérisée dans la revendication est caractérisé en ce que la cage est composée de quatre panneaux articulés les uns aux autres par des liaisons de couplage, et de deux volets basculants attachés aux extrémités opposées du panneau supérieur par des éléments d'articulation, l'ensemble étant agencé pour former une structure pliable par superposition des différents panneaux articulés selon quatre axes longitudinaux.

Selon un mode de réalisation préférentiel de l'invention, chaque panneau et/ou volet est formé par un grillage ou treillis rigide de fil métallique. L'un au moins des volets constitue la porte d'accès, et le panneau inférieur est doté d'une paire de bords obliques en V facilitant le rangement et la superposition des panneaux lors du pliage de la cage.

Les liaisons de couplage des panneaux comportent des anneaux de maintien ou des charnières pour l'articulation des panneaux adjacents.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés, dans lesquels:
la figure 1 est une vue schématique en perspective d'un piège selon l'invention, la cage étant représentée en position de travail ;
la figure 2 montre une vue de profil de la figure 1 ;
la figure 3 est une vue du piège dans la position repliée de repos de la cage.

Description d'un mode de réalisation préférentiel.

En référence aux figures, un piège 10 pour la capture d'un animal, comporte une cage 11 pliante susceptible de se trouver dans une position de repos d'encombrement minimum après pliage, et une position de travail après mise en forme selon un parallélépipède rectangle. La position de repos est utilisée pour le rangement ou le transport du piège 10, et la position de travail sert à son installation sur le site pour la capture d'un animal.

La surface latérale de la cage 11 est formée par quatre panneaux 12A, 12B, 12C, 12D rectangulaires, et articulés les uns aux autres pour former une structure déformable selon quatre axes s'étendant dans la direction longitudinale. Chaque panneau 12A, 12B, 12C, 12D est formé par un grillage réalisé à partir d'un treillis rigide de fil métallique.

En position de travail, les deux extrémités opposées de la cage 11 peuvent être fermées par des volets 13, 14 mobiles entre une position relevée, et une position abaissée. Les deux volets 13, 14 sont constitués par des pièces de grillage attachées aux arêtes transversales opposées du panneau supérieur 12A par des éléments d'articulation 15 autorisant un mouvement de basculement de 90° autour d'axes horizontaux 16, 17 et parallèles.

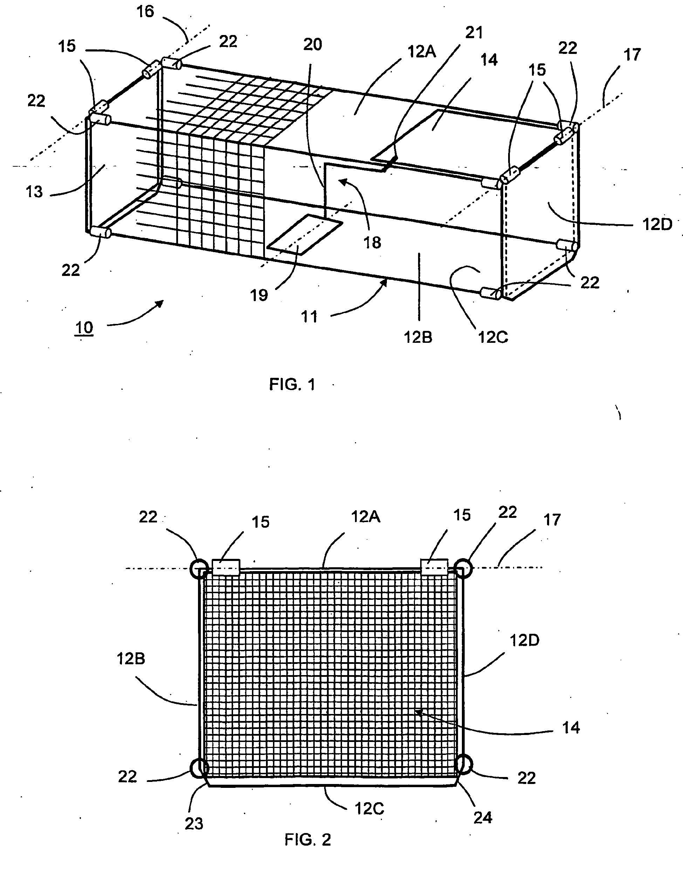

Le volet 14 est agencé selon une porte basculante coopérant avec un mécanisme de commande 18 doté d'une palette 19 de déclenchement reliée par une tige de transmission 20 à un verrou 21 du volet 14 lorsque ce dernier se trouve en position relevée (traits pleins sur la figure 1). Le verrou 21 est formé à titre d'exemple par un ergot qui maintient le volet 14 ouvert dans la position relevée. En fin de course de relevage, le volet 14 occupe une position horizontale d'attente sous le panneau supérieur 12A en laissant la cage ouverte. La palette 19 est montée à pivotement dans la zone médiane du panneau 12C inférieur. Le déclenchement du verrou 21 intervient automatiquement lorsque l'animal se trouve à l'intérieur de la cage 11, après avoir fait pivoter la palette 19. Le volet 14 libéré tombe par gravité ou par détente d'un ressort, ce qui provoque la fermeture de la cage 11. L'ensemble verrou 21, tige 20 et palette 19 peut être remplacé par tout autre dispositif de déclenchement.

Lors de l'installation du piège 10, l'autre volet 13 peut être abaissé pour fermer en permanence l'une des extrémités de la cage 11. Un système de retenue (non représenté), formé à titre d'exemple par des agrafes ou des crochets, maintient le volet 13 dans la position fermée. Il est clair que le volet 13 peut aussi être conformé selon une deuxième porte animée d'un mouvement de déclenchement similaire à celui de la première porte.

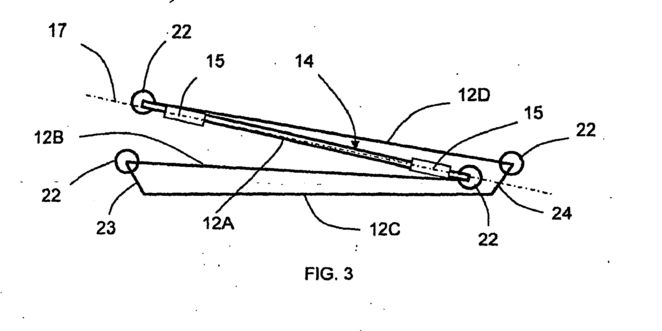

L'articulation des quatre panneaux 12A, 12B, 12C, 12D rectangulaires s'effectue au moyen de liaisons de couplage 22 prévues aux extrémités opposées de chaque paire de panneaux adjacents pour autoriser un mouvement relatif de pivotement autour des quatre axes longitudinaux. Les liaisons de couplage 22 peuvent être constituées par des anneaux de maintien, ou des charnières permettant la superposition par repliement des panneaux 12A, 12B, 12C, 12D lors du passage vers la position de repos (figure 3).

Le panneau inférieur 12C est doté avantageusement de bords 23, 24 obliques en V, facilitant la superposition des autres panneaux 12B, 12A, 12D lors du pliage de la cage 11. Dans cette position repliée de repos, le piège 10 occupe un encombrement minimum, ce qui est particulièrement intéressant pour le transport et le rangement.

Le grillage ou treillis des panneaux 12A, 12B, 12C, 12D et/ou des deux volets 13, 14 peut bien entendu être remplacé par des parois pleines, réalisées par un matériau rigide ou souple.

## Revendications

1. Piège pour la capture d'un animal, comprenant une cage (11) à l'intérieur de laquelle se trouve un mécanisme (18) de déclenchement d'au moins une porte d'accès, la cage (11) étant composée de quatre panneaux (12A, 12B, 12C, 12D) articulés les uns aux autres pair des liaisons de couplage (22), et de deux volets (13, 14) basculants attachés aux extrémités opposées du panneau supérieur (12A) par des éléments d'articulation (15), l'ensemble étant agencé pour former une structure pliable par superposition des différents panneaux articulés selon quatre axes longitudinaux, **caractérisé en ce que** le panneau inférieur (12C) est doté d'une paire de bords (23, 24) obliques en V facilitant le rangement et la superposition des panneaux (12A, 12B, 12C, 12D) lors du pliage de la cage (11).

2. Piège selon la revendication 1, **caractérisé en ce que** chaque panneau (12A, 12B, 12C, 12D) et/ou volet (13, 14) est formé par un grillage ou treillis rigide de fil métallique.

3. Piège selon la revendication 1, **caractérisé en ce que** l'un au moins des volets (14) constitue ladite porte d'accès.

4. Piège selon la revendication 1, **caractérisé en ce que** les liaisons de couplage (22) des panneaux (12A, 12B, 12C, 12D) comportent des anneaux de maintien pour l'articulation de deux panneaux adjacents.

5. Piège selon la revendication 1, **caractérisé en ce que** les liaisons de couplage (22) des panneaux (12A, 12B, 12C, 12D) comportent des charnières permettant la superposition par repliement desdits panneaux.

## Claims

1. Trap for capturing an animal, comprising a cage (11) inside which there is a mechanism (18) for triggering at least one access door, the cage (11) being composed of four panels (12A, 12B, 12C, 12D) articulated with one another by coupling connections (22), and two swinging shutters (13, 14) attached to opposite ends of the top panel (12A) by articulation elements (15), the assembly being set up to form a foldable structure by overlaying the various panels articulated about four longitudinal axes, **characterised in that** the bottom panel (12C) is provided with a pair of oblique V-shaped edges (23, 24) facilitating the arrangement and overlaying of the panels (12A, 12B, 12C, 12D) when folding the cage (11).

2. Trap according to claim 1, **characterised in that** each panel (12A, 12B, 12C, 12D) and/or shutter (13, 14) is formed by a rigid metal wire mesh or trellis.

3. Trap according to claim 1, **characterised in that** at least one of the shutters (14) forms the said access door.

4. Trap according to claim 1, **characterised in that** the coupling connections (22) of the panels (12A, 12B, 12C, 12D) comprise securing rings for the articulation of two adjacent panels.

5. Trap according to claim 1, **characterised in that** the coupling connections (22) of the panels (12A, 12B, 12C, 12D) comprise hinges allowing the overlaying of said panels by folding.

## Patentansprüche

1. Falle für das Fangen eines Tieres, die einen Käfig (11) aufweist, in dessen Innerem sich ein Mechanismus (18) für das Auslösen mindestens einer Zugangstür befindet, der Käfig (11) ist aus vier Wandteilen (12A, 12B, 12C, 12D), die untereinander über Kupplungsverbinder (22) miteinander gelenkverbunden sind und aus zwei schwenkbaren Klappen (13, 14), die an gegenüberliegenden Endbereichen des oberen Wandteils (12A) mittels Gelenkelementen (15) befestigt sind, zusammengesetzt, dabei ist die gesamte Anordnung so ausgelegt, dass sie eine durch Übereinanderlegen der verschiedenen, um vier longitudinale Achsen angelenkten Wandteile faltbare Struktur bildet, **dadurch gekennzeichnet, dass** das untere Wandteil (12C) mit einem Paar Rändern (23, 24) versehen ist, die in V-Stellung schräg sind und die das Unterbringen und die Anordnung übereinander der Wandteile (12A, 12B, 12C, 12D) während des Faltens des Käfigs (11) vereinfachen.

2. Falle nach Anspruch 1, **dadurch gekennzeichnet, dass** jedes Wandteil (12A, 12B, 12C, 12D) und/oder jede Klappe (13, 14) durch ein Gitter, insbesondere Drahtgitter, oder ein steifes Geflecht aus Metalldraht gebildet ist.

3. Falle nach Anspruch 1, **dadurch gekennzeichnet, dass** zumindest eine der Klappen (14) die genannte Zugangstür bildet.

4. Falle nach Anspruch 1, **dadurch gekennzeichnet, dass** die Kupplungsverbinder (22) der Wandteile (12A, 12B, 12C, 12D) Halteringe für die Gelenkverbindung von zwei benachbarten Wandteilen aufweisen.

5. Falle nach Anspruch 1, **dadurch gekennzeichnet, dass** die Kupplungsverbinder (22) der Wandteilen (12A, 12B, 12C, 12D) Scharniere aufweisen, die ein Anordnen übereinander durch Einfalten der Wandteile ermöglichen.
